Europäisches Patentamt

European Patent Office

Office européen des brevets

(19)

(11) Publication number: **0 078 365**
**A1**

(12) **EUROPEAN PATENT APPLICATION**

(21) Application number: 82106697.4

(51) Int. Cl.³: **C 04 B 19/04**

(22) Date of filing: 23.07.82

(30) Priority: 30.10.81 US 316854
30.10.81 US 316855
30.10.81 US 316857

(43) Date of publication of application: 11.05.83
Bulletin 83/19

(84) Designated Contracting States: AT BE CH DE FR GB IT LI LU NL SE

(71) Applicant: DIAMOND SHAMROCK CORPORATION, 717 North Harwood Street, Dallas Texas 75201 (US)

(72) Inventor: Vickers, Thomas M., Apt. 720-W 27500 Bishop Drive, Willoughby Ohio 44094 (US)
Inventor: Powers, Larry J., 149 Square Drive, Madison Ohio 44057 (US)

(74) Representative: Welckmann, Heinrich, Dipl.-Ing. et al, Patentanwälte Dipl.-Ing. H. Welckmann Dipl.-Phys.Dr. K. Fincke Dipl.-Ing. F.A. Welckmann Dipl.-Chem. B. Huber Dr.-Ing. H. Liska Möhlstrasse 22, D-8000 München 86 (DE)

(54) **Composition and process for modifying gelation of alkali metal silicates.**

(57) A liquid alkali metal silicate composition curable to a solid upon standing comprises water, an alkali, e.g., sodium silicate, and, as curing agent for said alkali metal silicate, glyoxal in admixture with one additive selected from the group consisting of a sodium bisulfite-sodium metabisulfite mixture and a polyhydroxy compound such as mannitol, glycerol, or sucrose. Instead of the afore-described glyoxal mixtures, certain glyoxal derivatives, such as 2,3-dihydroxy-1,4-dioxane or glyoxal trimer, are employed, which derivatives generate glyoxal "in situ". These compositions optionally contain a Group I–III metal salt, e.g., calcium chloride and hydrogen peroxide. With either curing system, the resulting compositions are easily pumpable and injectable at a temperature of 100°F or higher.

GEL TIME OF SILICATE –GLYOXAL
COMPOSITIONS WITH
INHIBITORS

EP 0 078 365 A1

BAD ORIGINAL

COMPOSITION AND PROCESS FOR
MODIFYING GELATION OF ALKALI METAL SILICATES

BACKGROUND OF THE INVENTION

1. Field of the Invention

This invention relates to compositions and to processes for controlling the gelation time of alkali metal silicate-containing compositions. More specifically, it relates to compositions and processes for controlling the gelation time of alkali metal silicate-containing compositions useful for, e.g., stabilizing soil, by incorporating into the silicate solution as the curing agent therefor, either glyoxal admixed with one of certain polyhydroxy compounds or with a sodium bisulfite-sodium metabisulfite mixture, or certain glyoxal derivatives which will generate glyoxal "in situ," all of which components modify the gel time of the silicate, whereby homogeneous gelled compositions of good load bearing capacity can be prepared even at elevated temperatures, e.g., 100° to 200°F.

2. Description of the Prior Art

It has long been known to produce gelled, cement-like masses from aqueous solutions of alkali metal silicates by the addition of salts of metals other than alkali metals, e.g., aluminum or iron. It is further known, as set forth in U.S. Patent 2,968,572 (Peeler), to render soil impermeable to fluid and/or to strengthen it by injecting into said soil a composition comprising an aqueous alkali metal, e.g., sodium silicate and a soluble amide such as formamide, acetamide, propionamide, butyramide and the like. During gelation of such compositions and thereafter, however, gaseous ammonia is liberated by the silicate-amide reaction, constituting a hazard to those working nearby, particularly in confined areas.

BAD ORIGINAL

The alkali metal silicate-containing soil stabilizing compositions described and claimed in U.S. Patent 3,306,758 (Miller), issued February 28, 1967, represents an improvement over the invention set forth in the aforesaid U.S. Patent 2,968,572 in that a lower alkyl aldehyde, e.g., formaldehyde, acetaldehyde and the like, is incorporated into the silicate-amide mixture as a binding or complexing agent for the ammonia generated during the gelling reaction. Thus, no significant quantities of ammonia vapors are released upon applying and reacting the silicate and amide components.

U.S. Patent 3,028,340 (Gandon, et al.), issued April 3, 1962, describes and claims a composition suitable for soil stabilization comprising an alkali metal silicate in combination with the linear dialdehyde, glyoxal, as hardener for the silicate. Although safer to apply than the aforesaid silicate-formamide formulations since they generate no hazardous ammonia vapors, such silicate-glyoxal compositions oftentimes gel too rapidly for practical application, particularly when used at elevated temperatures.

## SUMMARY OF THE INVENTION

It has now been found that the gel time of alkali metal silicate soil-stabilizing compositions may be inhibited by incorporating into said silicate solutions, along with glyoxal as curing agent therefor, either (1) a sodium bisulfite-sodium metabisulfite mixture ($NaHSO_3/Na_2S_2O_5$), or any one of certain polyhydroxy compounds such as mannitol, glycerol or sucrose. Alternatively, instead of the aforedescribed glyoxal mixtures, certain derivatives of glyoxal which will generate glyoxal "in situ" may likewise be employed. In either instance, the gel times of the resulting compositions are sufficiently inhibited to allow for their satisfactory application at elevated temperatures to provide homogeneous soil stabilization, particularly in subterranian sites.

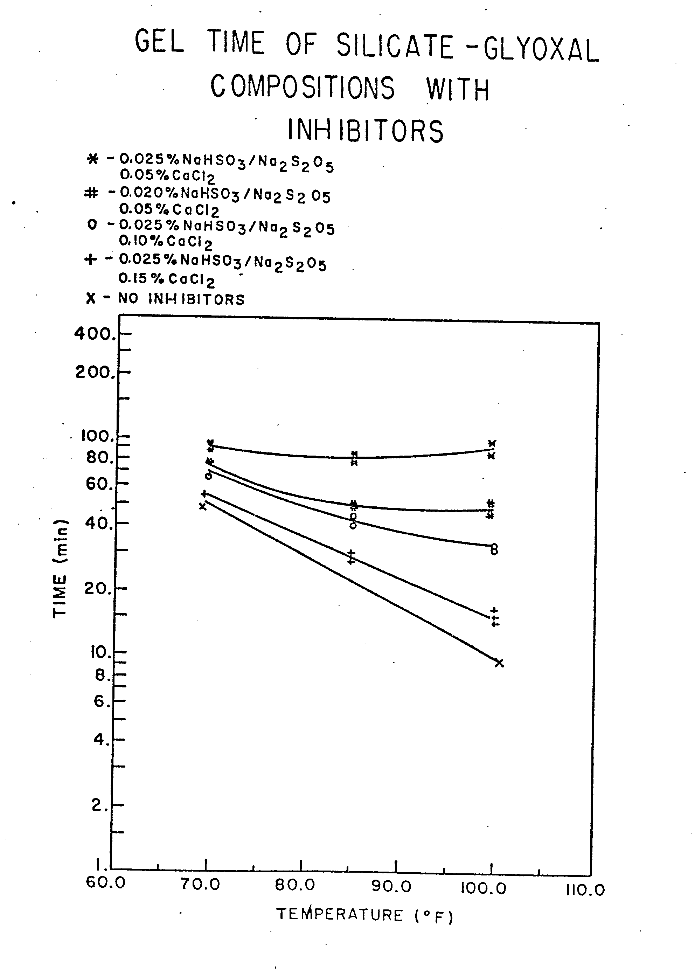

## BRIEF DESCRIPTION OF THE DRAWING

The advantages of the invention will become apparent upon reading the following detailed description and upon reference to the accompanying drawing which is a graph showing the slower gel times at different temperatures of silicate-glyoxal compositions which contain varying percentages of the $NaHSO_3/Na_2S_2O_5$ additive and reactive salt in accordance with this invention, compared to the gel times of straight silicate-glyoxal compositions at these same temperatures.

## DESCRIPTION OF THE PREFERRED EMBODIMENTS

As used herein in the specification and claims, the term "alkali metal silicate" is intended to refer to alkali metal silicates having an alkali metal oxide:silicon dioxide weight ratio within the range from about 1.0:3.0-4.0, notably, sodium silicates having a sodium oxide:silicon dioxide weight ratio within the range from about 1.0:3.0-4.0, preferably about 1.0:3.5. In practice, either an anhydrous alkali metal silicate, e.g., sodium metasilicate, or a silicate solution as commercially obtained, may be employed herein as the alkali metal silicate component. The anhydrous material will, of course, be dissolved in sufficient water to provide a solution of the desired solids concentration. An especially preferred material is an aqueous sodium silicate having a sodium oxide:silicon dioxide ratio of about 25:50 percent, most preferably $Na_2O-SiO_2$ solids content of about 35:45 percent by weight. The term "alkali metal," as used in the specification and claims, is intended to refer to the various alkali metals, i.e., sodium, potassium, lithium, rubidium, cesium, and mixtures thereof. Silicates of potassium and sodium are more generally available. In particular, sodium silicate solutions, being commercially available in a wide variety of solids concentrations and $Na_2O:SiO_2$ ratios, are more widely used and are presently preferred in practice of the invention. Accordingly, particular reference is made hereinafter to sodium silicates. The silicate may be employed undiluted as purchased, or it may be diluted with water.

In those embodiments of this invention which employ glyoxal mixtures as the gel inhibiting curing component, the glyoxal component of the composition generally may be incorporated therein either as an anhydrous solid or as a 40 percent aqueous solution, both of which forms are available commercially. Being more convenient and easily handled, however, the aqueous glyoxal solution

BAD ORIGINAL

is-preferred. Generally, from about 0.25 mole to 1.05 moles of glyoxal may be employed per liter of total composition to provide, in combination with the $NaHSO_3/Na_2S_2O_5$ additive or the polyhydroxy compound additive, a soil stabilizing composition which is more flexible in use at higher temperatures than those silicate compositions containing glyoxal alone as gelling agent. In presently preferred practice, from about 0.35 to 0.70 mole of glyoxal is employed per liter of total composition.

Specific polyhydroxy compounds which are useful as gelling inhibitors in silicate-glyoxal compositions of this invention are mannitol, glycerol and sucrose. The quantity of the polyhydroxy compound is somewhat critical for providing to the composition the desired gelling inhibition while not substantially affecting other properties thereof. In general, use of from 0.5 mole to 2.0 moles of polyhydroxy compound for each mole of glyoxal will provide the desired gelling retardation in the soil composition. Preferably at the present time, use of 0.8 mole to 1.2 moles and still more preferably , use of 1.0 mole of polyhydroxy compound per mole of glyoxal provides adequate gelling inhibition of the composition at elevated temperatures of 100°F or higher.

In present practice, when employing mannitol as the polyhydroxy compound in an equimolar ratio to glyoxal, the gelation time of the selected composition may be increased three fold at room temperature, and from 400 to 500 percent at 100°F, by comparison to a material containing glyoxal only. When employing glycerol, the gelation time of the composition may be inhibited up to approximately 50 percent at room temperature, and oftentimes up to 100 percent or more at 100°F.

In addition to those compositions of this invention which contain silicate, glyoxal and polyhydroxy compound, also included herein are silicate compositions which additionally contain a reactive salt capable of reacting with the alkali metal silicate rapidly to form, with the silicate, a completely or substantially water-insoluble gel. In some applications, for example, in the treatment of soil at a depth below the existing water level, ground moisture present could be a disadvantage in dissolving the initially formed gel, thus effectively inhibiting the desired soil stabilization. Accordingly, in such a situation, it is a preferred practice of this invention that in addition to the polyhydroxy compound, the silicate-glyoxal composition further contain a reactive salt for the purpose of imparting a high degree of initial water-insolubility to the silicate gel which forms therefrom. The term "reactive salt" is intended to mean those Group I-III metal salts which chemical react with aqueous alkali metal silicate to produce a completely or substantially water-insoluble gel. Specific reactive salts include sodium aluminate, aluminum chloride, copper sulfate, zinc chloride and calcium chloride, with calcium chloride being preferred. When a reactive salt is used, it generally is incorporated as an aqueous solution wherein the concentration of salt is within the range of from about 25 grams/liter of solution up to saturation. Of course, the amount of reactive salt employed should be insufficient to form a satisfactory gel if used alone with the silicate. Care should likewise be taken not to use highly excessive amounts of reactive salts of polyvalent metals since such reactive salts can readily form insoluble complexes with the silicate which then will precipitate from the system. When employed, the amount of aqueous salt, e.g., a 5 weight/volume percent calcium chloride solution, generally comprises 2 to 12 percent, preferably 3 to 10 percent, by volume of the total composition. On a molar basis, generally from about 0.009 to 0.06 mole, and preferably from about 0.01 to 0.05 mole of, e.g., calcium chloride, may be employed per liter of total composition. It is to be understood, of course, that a reactive salt need not be employed unless a high degree of gel water-insolubility is needed initially.

Also, compositions of this invention which contain glyoxal and polyhydroxy compound as curing agents for the silicate may further contain hydrogen peroxide ($H_2O_2$), primarily as an accelerator for silicate curing, particularly in those compositions which exhibit extremely long gel times. In such instances, from about 0.001 to 0.05 mole of $H_2O_2$ may be employed per liter of composition.

The sodium bisulfite-sodium metabisulfite ($NaHSO_3/Na_2S_2O_5$) additive used herein is a mixture of varying percentages of the aforesaid salts. The specific mixture illustrated herein in the examples is composed of 59.6 percent of $NaHSO_3$ and 40.4 percent of $Na_2S_2O_5$. In practice, it has been found that by incorporating as little as 0.025 percent of this mixture per liter of composition, the gelation time of the 40 percent silicate-6 percent glyoxal formulation usually is delayed from 11 minutes to several hours at 100°F.

Reducing the concentration of the additive 0.005 percent, i.e., to a concentration of 0.020 percent inhibitor, provides an inhibited gel time of about 2 hours at 100°F, by comparison to the straight glyoxal composition. Incorporation of as little as 0.010 percent additive is found to more than double the gelation time of the 40 volume percent silicate-6 volume percent glyoxal formulation at 100°F. Since silicate gelation may be so drastically inhibited through the use of such minor percentages of the $NaHSO_3/Na_2S_2O_5$ mixture, concomitant use of low percentages of a gelation accelerator, such as calcium chloride, will maintain the desired delay in gelation of the silicate while the calcium chloride serves to initially impart a higher degree of water insolubility to the soil stabilizing composition.

As indicated heretofore, from 0.005 to 0.10 volume percent of the $NaHSO_3/Na_2S_2O_5$ additive may generally be used herein to provide significant inhibition of silicate gelling by glyoxal. Also, in practice of the invention, as well be shown hereinafter by specific example, accelerators such as calcium chloride which is incorporated with higher levels of the $NaHSO_3/Na_2S_2O_5$ additive will provide soil stabilizing compositions of enhanced compressive strength upon curing, while maintaining the inhibited gel time desired. When employed with this curing system, the reactive salt is incorporated as an aqueous solution at concentrations ranging from 0.05 volume percent to 0.15 volume percent of salt. In present practice, the required quantity of calcium chloride is easily dissolved in the required quantity of water in the composition.

In those embodiments of the invention which employ glyoxal derivatives rather than glyoxal per se, that used in one instance is 2,3-dihydroxy-1,4-dioxane which generates glyoxal "in situ." This compound is known, and can be synthesized by reacting together glyoxal and ethylene glycol according to the method reported by Frank S. H. Head in J. Chem. Soc., "An addition Compound of Glyoxal and Ethylene Glycol," 1955, pp. 1036-37.

In the other instance, the glyoxal derivative used is glyoxal trimer, which also reacts "in situ" to supply acidogen for curing the alkali metal silicate. Glyoxal trimer likewise is a known compound and is available commercially. Both of the aforesaid glyoxal derivatives are solids at room temperature, but dissolve readily in contact with water and/or the alkali metal silicate solution.

When using either of the above-described glyoxal derivatives, a Group I-III reactive salt such as already enumerated is included in present practice, calcium chloride being specifically preferred. When employed, the aqueous salt, e.g., a 5 weight/volume percent calcium chloride solution, generally comprises 0.001-12.0 percent, preferably 0.30-5.00 percent by volume of the total composition.

Also, hydrogen peroxide ($H_2O_2$) may be used as a curing accelerator, together with the glyoxal derivatives used herein as curing agents for the alkali metal silicate. In practice, it generally may be satisfactorily employed alone or, alternatively, in combination with a Group I-III reactive salt as heretofore described. The hydrogen peroxide normally will be employed in solution at a concentration of 3-4 percent, by weight. On a volume basis, $H_2O_2$ (a 3.47 weight percent solution) typically is incorporated in an amount ranging from 0.33 to 5.00 percent per liter of composition.

Regarding the proportion of glyoxal derivative used, quantities of each are employed that will supply or generate in the formulation approximately the same quantity of glyoxal as used in straight silicate-glyoxal formulations heretofore. Accordingly, from 0.25 to 1.05 moles of 2,3-dihydroxy-1,4-dioxane generally will be employed per liter of composition. From 0.08 to 0.35 moles generally, and preferably from 0.12 to 0.25 moles of glyoxal trimer will be used per liter of composition.

The compositions of this invention will, of course, incorporate sufficient water to render them fluid. Generally, at least a portion of the necessary water will be supplied by using a commercial aqueous alkali metal silicate as described above, with additional water being supplied, if desired, as by admixture of the water with the curing agent and/or with any reactive salt solution when employed. It will be appreciated, of course, that the amounts of glyoxal mixtures or derivatives, added water and optionally hydrogen peroxide and/or reactive salt used in proportion to the silicate, as well as the amount of soil treated with a given quantity of such a composition, varies widely depending upon the porosity, permeability and type of soil, nature of the substrata, if subsoil applications are intended, and the like. Accordingly, it generally is not feasible to define in terms of proportions a composition which represents an optimum material for use in all types of soil solidification and/or stabilization operations.

However, effective soil stabilization compositions of the present invention generally comprise, from about 10 to 70 percent, preferably about 30 to 50 percent, by volume, of an aqueous alkali metal silicate having an alkali metal oxide:silicon dioxide weight ratio within the range of 1.0:3.0-4.0. They will contain about 0.25 to 1.05 moles, preferably 0.35 to 0.70 mole of glyoxal per liter of composition, when glyoxal-polyhydroxy compound or glyoxal-$NaHSO_3$/- $Na_2S_2O_5$ mixtures are being used; alternatively, they will incorporate about 0.25 to 1.05 moles of 2,3-dihydroxy-1,4-dioxane (or from 0.08 to 0.35 mole of glyoxal trimer) per liter of composition. Silicate formulations of this invention will employ about 0.12 to 2.1 moles, preferably about 0.28 to 0.84 mole of polyhydroxy compound per liter of composition; about 0.005 to 0.10, preferably about 0.010 to 0.025 weight/volume percent of the $NaHSO_3$/$Na_2S_2O_5$ additive. In those compositions which employ glyoxal derivatives as curing agent, for each liter of composition, optionally about 0.001 to 0.025 mole of Group I-III reactive salt and/or about 0.001 to 0.13 mole, preferably about 0.003 to 0.052 mole of hydrogen peroxide may be incorporated. In any formulation, the balance of the soil stabilizing composition (to provide 100 percent by weight) is added water (water in addition to that separately admixed with either alkali silicate, glyoxal, glyoxal derivative, hydrogen peroxide or reactive salt). No water need be added or it may be present in an amount of 0.5 to 8.5 times the volume of aqueous commercial silicate used. However, at temperatures greater than room temperature, and when a high-strength gel is required, it is better to add little, if any, water to the aqueous commercial silicate.

The compositions of this invention may be used particularly for increasing the load-bearing capacity of soils, for arresting settlement and lateral movement of foundations, and for controlling the flow of water in subterranean engineering projects such as tunnels and mines. The term "soil," as used in the specification and claims, is intended to refer to various types and compositions of soil, including sand, loam, porous or fissured rock, and the like, for example, as described in pages 614-633 of Vol. 12 of the Kirk-Othmer Encyclopedia of Chemical Technology, First Ed.

The soil stabilizing compositions of this invention provide many advantages to the routineer. They are easily pumpable liquids which may be simply injected into the soil site. They accomplish soil stabilization in customized gel times economically. Finally, the soil stabilizing compositions of this invention release no noxious fumes or objectionable residues which could constitute a health hazard to persons applying them.

In addition to their utility as soil stabilizing materials, the compositions of this invention may likewise be useful, either by themselves or in combination with other adjuvants, as coatings for imparting strength, water-impermeability, fire resistance and/or chemical corrosion resistance to paper, roofing materials, wood, textiles, metal surfaces, water lines, and structural materials, e.g., building materials of various composition or insulation. They may also be employed as adhesives for binding, gluing, briquetting, pelletizing or agglomerating materials such as flooring, asbestos, roofing granules and the like, and as absorbing or adsorbing materials for encapsulating, confining or otherwise fixing liquids, gases or solids hazardous to the environment. Further, these compositions, either as gels or in hardened granular form, may find utility as chemical carriers and as flocculants for purifying and disinfecting water.

For a fuller understanding of the nature and objects of this invention, the following specific examples are given. These examples, however, are not to be construed as limiting the invention in any way.

## EXAMPLE 1

This example illustrates the gel inhibiting characteristics of a polyhydroxy compound when added to sodium silicate in combination with glyoxal curing agent. A stock solution was prepared at ambient temperature by pouring into a container 120 ml (168g) of liquid sodium silicate, Grade 40 (1 $Na_2O:3.22$ $SiO_2$, average solids content 38 percent by weight 41.5° Bé at 20°C). In a separate container, a second stock solution was prepared by mixing 18 ml of a 40 percent aqueous solution of glyoxal with 25.7g mannitol and 142 ml of water. To account for the large dilution effect of the mannitol, the mannitol was dissolved in sufficient water to produce a solution of the same volume as water which would have been incorporated into a silicate-glyoxal composition. The mole ratio of glyoxal to mannitol in this solution was 1:1. After preparing these solutions and allowing the temperature of said solutions to equilibrate at 100°F in a water bath, a 12 ml aliquot was taken of the silicate stock solution. An 18 ml aliquot was likewise taken from the glyoxal-mannitol stock solution, which aliquot was added to the silicate aliquot. The resulting mixture was returned to the water bath maintained at 100°F. The time of the original mixing of the two aliquots was recorded, as well as the time when the mixture attained pudding consistency. The difference between the two times was considered the gel time.

Up to 2 weeks after preparing the foregoing stock solutions, aliquots were removed therefrom and blended together. These were maintained at 100°F, while recording the gelling times. The average of the different gelling times was 60 minutes. Solutions containing the same amounts of silicate and glyoxal but excluding mannitol exhibited an average gelling time of 11 minutes at 100°F.

## EXAMPLE 2

Another silicate stock solution was prepared as set forth in Example 1. A stock solution of glyoxal and mannitol was prepared in which the mole ratio of glyoxal to mannitol was 1:0.5. Aliquots were taken from each stock solution and blended together at prescribed times as described in Example 1. The resulting mixtures were then maintained at 100°F, the initial time of mixing and the gelling time being recorded. The average gelling time of the mixtures was 39 minutes, while the composition of silicate and glyoxal alone exhibited an average gel time of around 11 minutes at a temperature of 100°F.

EXAMPLE 3

A.  The stock solution of silicate was prepared as described previously.  A stock solution of glyoxal and glycerol was prepared by mixing 18 ml of 40 percent glyoxal solution with 21 ml of glycerol. A 12 ml aliquot of the silicate solution was removed and blended with a 3.86 ml aliquot of the glyoxal-glycerol stock solution which had been dissolved in 14.14 ml of water.  Gel times of the silicate and glyoxal-glycerol mixture were recorded upon preparation and maintenance at 100°F as previously set forth.  The average gel time of the silicate-glyoxal compositions containing glycerol was approximately 25 minutes, which gel time is more than double that of the straight silicate-glyoxal soil stabilizing composition.

B.  Solutions containing silicate and a mole ratio of glyoxal to glycerol of 1:1 were tested as above.  In these compositions, 2.83 ml of stock solution and 15.17 ml of water were combined with the silicate, as above.  These compositions had an average gel time at 100°F of approximately 22 minutes.

EXAMPLE 4

This example illustrates the manner in which the gel time of a soil stabilizing composition according to the invention may be customized by also incorporating hydrogen peroxide and/or calcium chloride as gelling agents.

Initially, a silicate-glyoxal-mannitol composition was prepared using the following quantities of components: 12 ml (16.8g) of 40 percent aqueous sodium silicate, 1.8 ml of 40 percent glyoxal solution, providing 6 percent by volume of glyoxal in the composition, and 5.15g mannitol in 16.2 ml of water.  The ratio of glyoxal to mannitol employed was 1:2.  This composition did not gel when maintained for 24 hours at 100°F.

The same formulation was prepared again, also adding 1.5 ml of 3.47 percent hydrogen peroxide and 1.5 ml of a 5 percent solution of calcium chloride.  This composition gelled in approximately 37 minutes at 100°F.

### EXAMPLE 5

A silicate-glyoxal soil stabilizing composition was prepared employing sucrose as the gel-inhibiting agent. A stock solution of silicate was prepared as previously described. A stock solution was then prepared from 18 ml of 40 percent glyoxal, 48.4g sucrose and 113.6 ml of water (total volume of solution was 180 ml), the mole ratio of glyoxal to sucrose being 1:1. At prescribed intervals, an aliquot of 12 ml (16.8g) of the silicate solution was mixed with an aliquot (18 ml) of the glyoxal-sucrose stock solution. The total volume of the combined aliquots was 30 ml. After being blended, the aliquot mixtures were maintained at 100°F. The average gel time observed for the silicate-glyoxal-sucrose blends was 18.5 minutes.

### EXAMPLE 6

This example illustrates the load-bearing capacity, i.e., compressive strength, of soil treated with the silicate-glyoxal-polyhydroxy compound compositions of this invention.

For each test sample, 100 ml of Ottawa sand (20-40 mesh) was measured into a graduated cylinder on a vibramixer. Stock solutions of at least 400 ml of silicate, glyoxal, polyhydroxy compound and water were prepared as outlined in the previous examples. For each test, approximately 36 ml of a specific stock solution was poured into a tri-pour beaker and the 100 ml sand added thereto. The resulting mixture was thoroughly blended on the vibramixer to remove any trapped air bubbles. For each composition containing a different polyhydroxy compound, a series of 10 sand mixtures was prepared. The excess stock solution remaining (30-40 ml) was poured into an empty container for an approximate gel time determination. The sand-solution beakers were capped and stored at room temperature and allowed to harden for 7 days. Five of the ten samples were then removed from the beakers, and compressive strength of the samples was measured on an Instron Tester (Model 1123). Compression was applied to each sample at a rate of 0.2 inch/minute (5 mm/minute). The maximum load for each sample was recorded and divided by the area of the beaker, 2.2 square inches (14.194 sq.cm.). The remaining stored samples were tested in the same manner after 30-days aging. Using this procedure, results are as follows:

TABLE 1

| Sample | Polyol | Ratio Glyoxal-Polyol | Average Compressive Strength (Kilograms/cm$^2$) 7 Days | 30 Days |
|---|---|---|---|---|
| Product of Example 1 | Mannitol | 1:1 | 3.8 | 4.7 |
| Product of Example 3B | Glycerol | 1:1 | 5.8 | 7.4 |
| Silicate- Glyoxal Control | - | - | 5.3 | 8.6 |

As indicated by the above strength values of soil samples stabilized with the representative compositions of this invention, these compositions will provide adequate stabilization tot he soil and prevent its lateral movement, etc., even when injected at a temperature of 100°F or higher.

## EXAMPLE 7

To further illustrate the gel inhibiting characteristics of the polyhydroxy components according to this invention, additional formulations were prepared as previously described, and the gel time of each was determined at room temperature (72°F) and at 100°F. As a control, a straight silicate-glyoxal composition was similarly prepared and the gel time thereof was measured both at room temperature and at 100°F. Results are as follows:

TABLE 2

| Sample | Mole Ratio | Gel Time – minutes | |
| --- | --- | --- | --- |
| | | 72°F | 100°F |
| Glyoxal-Mannitol | 1:1 | >180 | 52 |
| Glyoxal-Glycerol | 1:1 | 85 | 22 |
| Glyoxal | – | 60 | 10.5 |

The above values show that the addition of the prescribed polyhydroxy compounds to silicate-glyoxal soil stabilizing compositions in accordance with this invention provides substantial retardation of gelling, particularly when the compositions are applied at an elevated temperature.

EXAMPLE 8

This example illustrates the gel inhibiting characteristics of the sodium bisulfite/sodium metabisulfite mixture when added to sodium silicate in combination with glyoxal curing agent. For the test, 1.250g of an $NaHSO_3/Na_2S_2O_5$ additive (analysis = 59.6 percent $NaHSO_3$; 40.4 percent $Na_2S_2O_5$) was dissolved in sufficient water to make 25 ml of solution with a concentration of 5 weight/volume percent of the salt. For each test, 18 ml of 40 percent aqueous glyoxal was added to the volume of water shown in the table below. Into each of a series of containers positioned in a water bath maintained at 100°F (±1°F) was added 120 ml (168g) of liquid sodium silicate, Grade 40 (1 $Na_2O$:3.22 $SiO_2$, average solids content, 38.3 percent by weight, 41.5° Bé at 20°C). Quantities of the gel inhibitor as shown in the table were added to the liquid silicate with thorough blending.

After blending, the time was recorded and then each composition was observed for gelling. The time at which the consistency of the

0078365

composition became like pudding was recorded, its gelling time being the difference between the initial and final times recorded. For each concentration of silicate, a straight silicate-glyoxal formulation was prepared as a control. Using this procedure, results are as follows:

Table 3

| Sample No. | Added Water ml | Inhibitor ml | Solution Wt/Vol% | Gel Time 100°F (min) |
|---|---|---|---|---|
| 40% Silicate Grout* 6% Glyoxal | | | | |
| 1 | 161.4 | 0.6 | 0.01 | 26.5 |
| 2 | 161.1 | 0.9 | 0.015 | 50 |
| 3 | 160.8 | 1.2 | 0.020 | 164.0 |
| 4 | 160.5 | 1.5 | 0.025 | 253 |
| Control | 162.0 | – | – | 11 |
| 20% Silicate Grout* 4% Glyoxal | | | | |
| 1a | 227.1 | 0.9 | 0.015 | 51 |
| 2a | 227.4 | 0.6 | 0.010 | 43 |
| 3a | 227.7 | 0.3 | 0.005 | 29 |
| Control | 228.0 | – | – | 23 |

* Percentages are by volume.

As the above results show, the gel time of the silicate as effected by the glyoxal curing agent becomes more strongly inhibited as the concentration of the $NaHSO_3/Na_2S_2O_5$ mixture is increased in the composition.

## EXAMPLE 9

Formulations as set forth in Example 8 above were again prepared at 100°F. In these formulations, minor quantities of a 5 percent solution of calcium chloride ($CaCl_2$) were also included as a curing agent or curing accelerator. The results obtained are as follows:

TABLE 4

| Sample No. | Inhibitor Solution Wt/Vol% | CaCl$_2$ Wt/Vol% | Gel Times at 100°F (min) |
|---|---|---|---|
| 40% Silicate* 6% Glyoxal | | | |
| 5 | 0.025 | 0.05 | 99 |
| 6 | 0.025 | 0.10 | 35 |
| 7 | 0.015 | 0.15 | 16 |
| 8 | 0.020 | 0.05 | 51 |
| 9 | 0.020 | 0.15 | 10 |
| Control | - | - | 11 |
| 20% Silicate* 4% Glyoxal | | | |
| 5a | 0.020 | 0.05 | 36 |
| Control | - | - | 23 |

* As described previously.

These values illustrate that the gel times of those silicate-glyoxal compositions which contain the NaHSO$_3$Na$_2$S$_2$O$_5$ inhibitor can be shortened as desired by incorporation of prescribed quantities of a secondary accelerator such as calcium chloride.

EXAMPLE 10

This example illustrates that the gel or set time of a silicate composition of this invention can be customized and adapted for a particular application by varying its preparation temperature.

For the test, compositions were first prepared at 70°F which contained, on a volume basis, 40 percent Grade 40 sodium silicate solution, 6 percent of 40 percent aqueous glyoxal, varying quantities of a 5 weight/volume percent solution of NaHSO$_3$/Na$_2$S$_2$O$_5$ and a 5 weight/volume percent solution of calcium chloride as shown in the following table, and the balance, water, to make 300 ml of composition. The gel times of these compositions were recorded.

The same compositions were then prepared at 85°F and at 100°F and their gel times recorded. Straight silicate-glyoxal compositions were prepared and tested at different temperatures as controls. Results are as follows:

TABLE 5

| Sample | Temperature °F | $NaHSO_3/Na_2S_2O_5$ Wt/Vol% | ml | $CaCl_2$ ml | Average Gel Time (min) |
|--------|------|-----------|------|-----|------|
| 1 | 70 | (0.025) | 1.5 | 9 | 57 |
|  | 85 |  | 1.5 | 9 | 28.5 |
|  | 100 |  | 1.5 | 9 | 16 |
| 2 | 70 | (0.020) | 1.2 | 3 | 81 |
|  | 85 |  | 1.2 | 3 | 53 |
|  | 100 |  | 1.2 | 3 | 31 |
| 3 | 70 | (0.025) | 1.5 | 6 | 75 |
|  | 85 |  | 1.5 | 6 | 46 |
|  | 100 |  | 1.5 | 6 | 35 |
| 4 | 70 | (0.025) | 1.5 | 3 | 98 |
|  | 85 |  | 1.5 | 3 | 87 |
|  | 100 |  | 1.5 | 3 | 57 |
| Control | 70 |  | - | - | 61 |
|  | 85 |  | - | - | 28 |
|  | 100 |  | - | - | 11 |

As illustrated, the temperature at which the above silicate compositions are prepared likewise affects their gel times as well as the particular inhibitor or inhibitor-accelerator combinations. These facts are graphically illustrated in the accompanying drawing in which gel time (in minutes) is plotted against the temperature (°F) at which the samples were prepared.

EXAMPLE 11

To determine whether or not the sodium bisulfite/sodium metabisulfite additive will inhibit the gel time of known silicate-acidogen systems other than those with glyoxal, the following experiments were carried out:

A.  A solution was prepared containing, by volume, 40 percent Grade 40 sodium silicate, 4.5 percent of diacetin, 0.25 percent of 5 percent calcium chloride, and the balance water.  The gel time of this composition was found to be 9 minutes.  Another like solution was prepared, adding 0.025 percent of 5 percent weight/volume solution of sodium bisulfite/sodium metabisulfite as gelation inhibitor.  The gel time of this composition was also 9 minutes.  Thus, the bisulfite/metabisulfite additive did not inhibit the gel time of a silicate composition containing diacetin as acidogen.

B.  A solution was prepared containing by volume 40 percent of Grade 40 sodium silicate, 6 percent formamide, 0.15 percent of 5 percent aqueous calcium chloride, and the balance water.  The average gel time of this composition was found to be 103 to 104 minutes.  This solution was prepared again, also incorporating 0.025 percent (1.5 ml) of a 5 weight/volume percent solution of sodium bisulfite/metabisulfite mixture.  The gel time of this solution was also 104 minutes.  Thus, the bisulfite/metabisulfite additive did not inhibit the gel time of silicate compositions containing formamide as acidogen.  Accordingly, this inhibitor appears to be somewhat selective in its gel inhibiting action on silicate compositions which contain glyoxal as acidogen.


EXAMPLE 12

To test for compressive strength of soil impregnated with the gel-inhibited silicate/glyoxal compositions of this invention, 100 ml of Ottawa Sand (ASTM C-109) was measured into each of 15 tri-pour beakers containing approximately 36 ml of a composition.  The composition was composed of 40 percent by volume of Grade 40 sodium silicate solution and other components as listed in the table below.  Each composition was thoroughly mixed on a vibramixer to remove any entrapped air bubbles.  The beakers were then capped and stored at room temperature until tested for compressive strength.

After two-days storage, five of the compacted sand samples were removed for compressive strength measurement.  This measurement was made on an Instron Tester, Model 1123, applying the load at a rate of 5 mm/min (or 0.2 inch/min) and recording the maximum load (pressure) which could be applied to each sample before structural damage

0078365

occurred. These values were divided by 2.2 square inches, the area of the tri-pour beaker. Five more samples were tested in the same manner after 7-days aging, and the remaining samples after 30-days aging. The recorded pressure readings were converted to kilograms/-cm$^2$. Using this procedure, results are as follows:

## TABLE 6

| Sample | Reactants Added | Average Compressive Strength $(kilograms/cm^2)$ | | |
|--------|-----------------|--------|--------|---------|
| | | 2 Days | 7 Days | 30 Days |
| A | 6% Glyoxal[1] Water-balance | 5.5 | 5.6 | 9.1 |
| B | 6% Glyoxal 0.02% $NaHSO_3/$ $Na_2S_2O_5$ Water-balance | 3.1 | 3.6 | - |
| C | 6% Glyoxal 0.02% $NaHSO_3/$ $Na_2S_2O_5$ 0.05% $CaCl_2$ Water-balance | 3.5 | 3.9 | 9.4 |
| D | 6% Glyoxal 0.025% 5% $NaHSO_3/$ $Na_2S_2O_5$ 0.10% $CaCl_2$ Water-balance | 3.4 | 4.0 | - |
| E | 6% Glyoxal 0.015% $NaHSO_3/$ $Na_2S_2O_5$ Water-balance | 5.1 | 5.5 | 10.3 |

---

[1] Forty percent glyoxal in water.

These data indicate that compositions of this invention with inhibited gel times exhibit adequate strength for numerous applications, e.g., soil hardening or stabilizing.

## EXAMPLE 13

To determine whether or not both components of the alkali metal silicate gelling inhibitor of this invention, i.e., the sodium bisulfite/sodium metabisulfite mixture, possess gel inhibiting characteristics, a series of silicate compositions were prepared and tested at 100°F as follows:

A standard solution was prepared containing by volume 40 percent of Grade 40 sodium silicate solution, 6 percent of a 40 percent solution of glyoxal, 0.15 percent of a 5 weight/volume percent of calcium chloride, and the balance water. The gel time of this solution was 7 minutes.

The standard solution was prepared again, also incorporating 0.025 percent (weight/volume) of the sodium bisulfite/sodium metabisulfite used herein. The gel time of this solutin averaged about 16 minutes.

Again, the standard solution was prepared, incorporating in this instance 0.025 weight/volume percent of sodium sulfite ($Na_2SO_3$). The gel time of this solution was about 14 minutes.

Finally, the standard solution was prepared incorporating, as the inhibitor, 0.025 weight/volume percent of sodium metabisulfite. The gel time of this solution was about 23 minutes.

These results are believed to indicate that sodium metabisulfite is the main inhibiting component of the sodium bisulfite/sodium metabisulfite silicate gel-inhibiting additive of this invention.

## EXAMPLE 14

### Preparation of 2,3-Dihydroxy-1,4-dioxane

Mixed together were 150g of a 40 percent, by weight, glyoxal solution and 64.17g of ethylene glycol, providing, on a molar basis, 1.034 moles of each reactant. This mixture was maintained in vacuo over phosphorous pentoxide for approximately two weeks, during which time the mixture substantially solidified. The solids were separated from the syrupy liquid fraction by adding acetone to the mixture and filtering. After drying, the isolated crystals weighed 110.8g, or 89.2 percent of the theoretical yield (124.2g), with a melting point of 103 - 106°C. A portion of the material was recrystallized from acetone. Colorless crystals were obtained with a melting point of 100-101°C.

## EXAMPLE 15

A silicate composition was prepared incorporating the recystallized 2,3-dihydroxy-1,4-dioxane as follows:

Eighty ml. (80 ml. or 112g) of Grade 40 sodium silicate solution was poured into a container which was positioned in a water bath maintained at 100°F. A solution was prepared by adding 11.3g of the 2,3-dihydroxy-1,4-dioxane product of Example 14 to 120 ml. of water. This solution was then blended with the sodium silicate at 100°F. The gelling time of the blended material was determined with a Brookfield viscometer (Model RVT) using the No. 3 spindle at 100 rpm.

The timer was started when the reactants were combined and stopped when the mixture gelled. Using this procedure, the gel time of the silicate and 2,3-dihydroxy-1,4-dioxane composition was 35 minutes at 100°F.

The gel time of a silicate composition which employed glyoxal as the acidogen was 11 minutes at 100°F.

## EXAMPLE 16

Following the procedures of Example 15, a silicate composition was prepared at 100°F, employing 80 ml (112g) of Grade 40 sodium silicate solution. To this solution was added, with blending, 11.3g of 2,3-dihydroxy-1,4-dioxane, 10 ml of 5 percent weight/volume solution of calcium chloride (providing 0.25 percent salt per liter of composition) and 110 ml of water to give a total volume of 200 ml. Viscosity of the composition was measured with timing until it gelled. Using this procedure, the gel time of this composition was approximately ten minutes. Thus, calcium chloride is an efficient gelling accelerator for the silicate, along with the 2,3-dihydroxy-1,4-dioxane as curing agent therefor.

## EXAMPLES 17 and 18

Again following the blending procedure according to Example 15, formulations were prepared at 100°F employing 80 ml (112g) of the Grade 40 sodium silicate solution, 11.3g of 2,3-dihydroxy-1,4-dioxane, the 5 weight/volume percent calcium chloride solution and/or 3.47 percent hydrogen peroxide, and water in the amounts shown in the Table below. A formulation containing the same quantities of silicate and 2,3-dihydroxy-1,4-dioxane but with no additives was prepared as a control. After preparation, the gel time of each composition was obtained by timed viscosity measurement. Results are as follows:

## TABLE 7

| Example | Wt/ Vol % $CaCl_2$ | Wt/ Vol % $H_2O_2$ | ml water | Gel Time (min) |
|---------|---------|--------|----------|--------|
| 17 | – | 0.1735 | 110 | 11.5 |
| 18 | 0.25 | 0.1735 | 100 | 6.0 |
| Control | – | – | 120 | 35.0 |

As can be seen by these results, the gel time of a composition at 100°F which contains only 2,3-dihydroxy-1,4-dioxane as the acidogen for the silicate (product of Example 15) will be accelerated by incorporating minor quantities of either calcium chloride and/or hydrogen peroxide. Gelling of the composition is accelerated the most by using the aforenamed compounds in combination.

## EXAMPLE 19

To determine the compressive strength of each test formulation above, for each test, 100 ml of Ottawa sand (ASTM C-109) was measured into each of ten tri-pour beakers containing 36 ml of the composition. Each composition was thoroughly mixed on a vibramixer to remove any trapped air bubbles. The beakers were then capped and stored at room temperature until tested for compressive strength.

Two days after preparation, for each test composition, five of the compact sand samples (5) were removed from their containers and compressive strength measurements made, using an Instron Tester, Model 1123. The load was applied at a rate of 5mm/minute (or 0.2 inches/minute), recording the maximum load (i.e., pressure) which could be applied to each sample before structural damage occurred. These values were divided by 2.2 square inches, the area of a tri-pour beaker. The other five sand samples were tested in the same manner after seven days aging. The recorded pressure readings were converted to kilograms/cm$^2$. The average results obtained are as follows:

TABLE 8

| Composition | Accelerator | Weight/ Volume % | Average Compressive Strength (Kilograms/cm$^2$) | |
|---|---|---|---|---|
| | | | 2 days | 7 days |
| Product of Example 15 | -- | - | 3.3 | 3.2 |
| Product of Example 16 | Calcium Chloride | 0.25 | 5.2 | 5.8 |
| Product of Example 17 | Hydrogen Peroxide | 0.17 | 5.3 | 5.6 |
| Product of Example 18 | Calcium Chloride Hydrogen Peroxide | 0.25 0.17 | 7.9 | 7.9 |

EXAMPLE 20

An alkali metal silicate composition was prepared at 100°F, employing the trimer (or trimeric dihydrate) of glyoxal as the acidogen for the silicate as follows:

Into a container positioned in a water bath maintained at 100°F, 120 ml (168 g) of Grade 40 sodium silicate was measured. Using a separate container, 9.9 g of glyoxal trimeric dihydrate was added to 130 ml of water. The resulting solution was then blended into the sodium silicate. After blending, the gel time of the solution was obtained with the Brookfield viscometer, as previously described, using a No. 3 spindle at 100 rpm. The gel time of the formulation at 100°F was found to be 35 minutes. The same formulation, when prepared and measured at room temperature, exhibited a gel time of 65 minutes.

## EXAMPLES 21-23

Following the procedure as outlined above, other formulations of alkali metal silicate with glyoxal trimer modifier were prepared at room temperature. In these formulations, reactive salt, i.e., calcium chloride ($CaCl_2$) solution and/or hydrogen peroxide ($H_2O_2$) solution was employed to determine the gel-accelerating effect of these chemicals on the silicate-trimer composition. The quantities of 5 percent $CaCl_2$ solution and/or 3.47 percent $H_2O_2$ employed are shown on the table below, the total volume of each composition amounting to 400 ml.

### TABLE 9

| Example | Additive | Volume-ml | wt/volume-% | Gel Time-min |
|---|---|---|---|---|
| 21 | 5% $CaCl_2$ | 6.67 | 0.083 | 53 |
| 22 | 3.47% $H_2O_2$ | 6.67 | 0.058 | 40 |
| 23 | 5% $CaCl_2$ | 3.33 | 0.042 | 39 |
|  | 3.47% $H_2O_2$ | 3.33 | 0.029 |  |

The composition of Example 20, i.e., that containing silicate and glyoxal trimer only, exhibited a gel time of 65 minutes at room temperature.

## EXAMPLE 24

Following the general procedure set forth in Example 19, the compressive strength of the formulations of Examples 20-23 was determined at room temperature, employing for each formulation ten samples of Ottawa sand mixed with 36 ml of the particular composition being tested.

Two days after preparation, half of the sand samples for each composition were removed from the containers and strength measurements made, using the Instron tester. The load was applied at a rate of 5 mm/minute (or 0.2 inches/minute), recording the maximum load which could be applied before structural damage of the sample occurred. The values obtained were divided by 2.2 square inches, the area of the containers. After seven days' storage, the remaining sand samples were tested in a similar manner. The calculated

0078365

pressure readings (psi) were converted to kilograms/$cm^2$. The results obtained are as follows:

### TABLE 10

| Composition | Gel Accelerator | wt/volume Percent | Average Compressive Strength (Kilograms/$cm^2$) | |
|---|---|---|---|---|
| | | | 2 days | 7 days |
| Product of Example 20 | - | - | 0.77 | 0.63 |
| Product of Example 21 | $CaCl_2$ | 0.083 | 3.28 | 3.36 |
| Product of Example 22 | $H_2O_2$ | 0.06 | 3.33 | 3.40 |
| Product of Example 23 | $CaCl_2$ $H_2O_2$ | 0.042 0.29 | 3.34 | 3.45 |

As seen from the above results, incorporation of gelling accelerators provides silicate-glyoxal trimer compositions with improved load bearing capacity.

0078365

WHAT IS CLAIMED IS:

1. In a liquid alkali metal silicate composition curable to a solid upon standing and comprising water, an alkali metal silicate and silicate acidogen, the improvement which comprises incorporating as the silicate acidogen, glyoxal in admixture with a compound selected from the group consisting of a polyhydroxy compound and a sodium bisulfite/sodium metabisulfite mixture; or a glyoxal derivative which is 2,3-dihydroxy-1,4-dioxane or glyoxal trimer, whereby gelling of the resulting composition is inhibited sufficiently so that it is easily pumpable at an application temperature of 100°F or higher.

2. The liquid alkali metal silicate composition of Claim 1 which comprises 10 to 70 percent by volume of an aqueous alkali metal silicate having an alkali metal oxide:silicon dioxide ratio of 1.0:3.0-4.0; about 0.25 to 1.05 moles of glyoxal per liter of composition; about 0.12 to 2.1 moles of a polyhydroxy compound which is mannitol, glycerol, or sucrose per liter of composition; and the balance water.

3. The liquid alkali metal silicate composition of Claim 1 which comprises 10 to 70 percent by volume of an aqueous alkali metal silicate having an alkali metal oxide:silicon dioxide ratio of 1.0:3.0-4.0; about 0.25 to 1.05 moles of glyoxal per liter of composition; about 0.005 to 0.10 weight to volume percent of a sodium bisulfite/sodium metabisulfite mixture per liter of composition; and the balance water.

4. The liquid alkali metal silicate composition of Claim 1 which comprises by volume 10 to 70 percent of an aqueous alkali metal silicate having an alkali metal oxide to silicon dioxide ratio of 1.0:3.0-4.0; about 0.25 to 1.05 moles of 2,3-dihydroxy-1,4-dioxane; and the balance water.

5. The liquid alkali metal silicate composition of Claim 1 which comprises, by volume, 10 to 70 percent of an aqueous alkali metal silicate having an alkali metal oxide to silicon dioxide ratio of 1.0:3.0-4.0; about 0.08 to 0.35 moles of glyoxal trimer; and the balance water.

6.     The liquid alkali metal composition of Claim 1 wherein the aqueous alkali metal silicate is sodium silicate containing from 25 to 50 percent solids by weight.

7.     The liquid alkali metal composition of Claim 2 wherein the polyhydroxy compound is glycerol.

8.     The liquid alkali metal composition of Claim 2 wherein the polyhydroxy compound is mannitol.

9.     The liquid alkali metal composition of Claim 3 in which the composition of the sodium bisulfite/sodium metabisulfite additive is about 60 percent bisulfite and about 40 percent metabisulfite by weight.

10.    The liquid alkali metal composition of Claim 1 which additionally contains a Group I-III metal salt reactive with the alkali metal silicate for imparting water-insolubility to the resulting silicate gel, which metal salt is sodium aluminate, aluminum chloride, copper sulfate, zinc chloride or calcium chloride.

11.    The liquid alkali metal composition of Claim 10 wherein the Group I-III metal salt is calcium chloride.

12.    In a method for stabilizing soil which comprises contacting said soil with a sole liquid composition comprising 10 to 70 percent by volume of an aqueous alkali metal silicate having an alkali metal oxide:silicon dioxide ratio of 1:3.0-4.0, about 0.25 to 1.05 moles of glyoxal per liter of composition, and water, the improvement which comprises adding to said composition a compound selected from the group consisting of a polyhydroxy compound and a sodium bisulfite/sodium metabisulfite mixture, whereby gelling of the resulting composition is significantly inhibited by comparison to that of a liquid alkali metal silicate-glyoxal composition and said composition is easily pumpable at an application temperature of 100°F or higher.

13.   The method of Claim 12 wherein from 0.5 to 2.0 moles of a polyhydroxy compound selected from the group consisting of mannitol, glycerol and sucrose is employed, for each mole of glyoxal used.

14.   The method of Claim 12 wherein from 0.005 to 0.10 weight to volume percent of a sodium bisulfite/sodium metabisulfite mixture is employed per liter of composition.

15.   The method of Claim 12 wherein the alkali metal silicate is sodium silicate containing 25 to 50 percent solids by weight.

16.   The method of Claim 12 wherein the soil stabilizing composition additionally contains a Group I-III metal salt reactive with the alkali metal silicate for imparting water-insolubility to the resulting silicate gel, which metal salt is sodium aluminate, aluminum chloride, copper sulfate, zinc chloride or calcium chloride.

17.   The method of Claim 16 wherein the Group I-III metal salt is calcium chloride.

18.   The method of Claim 12 wherein the soil stabilizing composition additionally contains from 0.001 to 0.05 mole of hydrogen peroxide per liter of composition.

19.   The method of Claim 18 wherein the soil stabilizing composition contains 30 to 50 percent by volume of an aqueous sodium silicate having a sodium oxide:silicon dioxide ratio of 1:0:3.0-4.0; from about 0.35 to 0.70 mole of glyoxal per liter of total composition; from about 0.28 to 0.84 mole of polyhydroxy compound selected from the group consisting of mannitol, glycerol, and sucrose, per liter of total composition; from about 0.001 to 0.05 mole of hydrogen peroxide per liter of total composition; from about 0.01 to 0.05 mole of calcium chloride per liter of total composition; and the balance water.

20. The method of Claim 18 wherein the soil stabilizing composition contains 30 to 50 percent by volume of an aqueous sodium silicate having a sodium oxide:silicon dioxide ratio of 1:0:3.0-4.0; from about 0.35 to 0.70 mole of glyoxal per liter of total composition; from about 0.010 to 0.025 weight/volume percent of the sodium bisulfite/sodium metabisulfite; from about 0.05 to 0.15 weight/volume percent of calcium chloride per liter of total composition; and the balance water.

21. In a method for stabilizing soil which comprises contacting said soil with a sole liquid composition comprising 10 to 70 percent by volume of an aqueous alkali metal silicate having an alkali metal oxide:silicon dioxide ratio of 1:3.0-4.0, an acidogen for the silicate, and the balance water, the improvement which comprises employing as the silicate acidogen a glyoxal derivative which is 2,3-dihydroxy-1,4-dioxane or glyoxal trimer, whereby gelling of the resulting composition is significantly inhibited by comparison to that of a liquid alkali metal silicate-glyoxal composition and said composition is easily pumpable at an application temperature of 100°F or higher.

22. The method of Claim 21 wherein from 0.25 to 1.05 moles of 2,3-dihydroxy-1,4-dioxane is employed as the silicate acidogen.

23. The method of Claim 21 wherein from 0.08 to 0.35 mole of glyoxal trimer is employed as the silicate acidogen.

24. The method of Claim 21 in which the soil stabilizing composition additionally contains a Group I-III metal salt reactive with the alkali metal silicate to impart water-insolubility to the resulting silicate gel.

25.    The method of Claim 21 in which the soil stabilizing composition additionally contains hydrogen peroxide as an accelerator for curing the alkali metal silicate.

26.    The method of Claim 24 in which the soil stabilizing composition contains in addition to the Group I-III reactive salt, hydrogen peroxide as an accelerator for curing the alkali metal silicate.

# GEL TIME OF SILICATE -GLYOXAL COMPOSITIONS WITH INHIBITORS

$*$ $-$ 0.025% $NaHSO_3/Na_2S_2O_5$
  0.05% $CaCl_2$

\# $-$ 0.020% $NaHSO_3/Na_2S_2O_5$
  0.05% $CaCl_2$

O $-$ 0.025% $NaHSO_3/Na_2S_2O_5$
  0.10% $CaCl_2$

$+$ $-$ 0.025% $NaHSO_3/Na_2S_2O_5$
  0.15% $CaCl_2$

X $-$ NO INHIBITORS

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | C 04 B    19/04 |
| Y | EP-A-0 028 495   (DIAMOND SHAMROCK CORP.) <br><br> * Claims 1-10 * | 1,2,4, 6,10, 11,25, 26 | |
| Y | FR-A-2 390 398   (KUREHA KAGAKU KOGYO K.K.) <br> * Claims 1-5 * | 1-3 | |
| Y | DE-A-2 328 056   (IDEMITSU KOSAN K.K.) <br> * Claims 1-4 * | 1-3 | |
| A | US-A-4 130 440   (NOSE et al.) <br> * Claims 1-9 * | 1 | |
| A | EP-A-0 029 196   (HENKEL KOMANDITGESELLSCHAFT AUF AKTION) <br> * Claims 1-3 * | 1,7,8 | **TECHNICAL FIELDS SEARCHED (Int. Cl. 3)** <br><br> C 04 B    19/04 <br> C 04 B    19/00 <br> C 04 B    17/00 |

The present search report has been drawn up for all claims

| Place of search | Date of completion of the search | Examiner |
|---|---|---|
| THE HAGUE | 07-02-1983 | STANGE R.L.H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82